# EUROPEAN PATENT APPLICATION

(11) **EP 2 767 202 A1**
(43) Date of publication of application: **20.08.2014**
(21) Application number: 14275021.5
(22) Date of filing: 06.02.2014
(51) Int. Cl.: A47J 43/04

(54) **Flexible food processor blade**

(30) Priority: 14.02.2013 US 201361764817 P
(71) Applicant: Browne & Co., Markham, Ontario L3R 1E3 (CA)
(72) Inventor: Ho, Neal, San Francisco, California 94105 (US)
(74) Representative: Burt, Matthew Thomas

(57) **Abstract**

A food processors and specifically to flexible blades for food processors. Disclosed is a rotatable, flexible cutting blade and a food processing apparatus using a rotatable, flexible cutting blade. The rotatable, flexible cutting blade is connected to a food processor drive mechanism and is comprised of one or more blade arms. The blade arms comprise a blade and a flexible portion where the flexible portion connects the blade to the drive mechanism via mechanical means. The blade arms start in a first position away from the plane orthogonal to the axis of rotation of the rotatable, flexible cutting blade. When the rotatable, flexible cutting blade is rotated at sufficient speeds, centrifugal forces cause the blades to move away from their first position. As the rotation slows, the blades return to their first position.

## Description

### FIELD

The present matter relates to food processors, particularly flexible blades for food processors.

### BACKGROUND

Food processors are generally known for the cutting and dicing of various foods. A common example of a food processor uses a metal blade fixed to a rotatable shaft connected to an electric motor. Food is contained by way of removable covering and when exposed to the blades rotating under power from the motor, food is chopped.

Food processors of this format have a defined cutting area, that is the blade or blades travel the same paths in their rotation circumscribing a set volume of space in which food must transit in order to be directly affected by the blades. In the case of most foods, such as herbs, cheeses, etc., it is desirable to have all pieces of processed food of consistent proportions and avoid instances of fine and coarse particulate food. However, this effect is difficult to achieve with traditional food processors as the limited cutting volume means that only some portions of the food will be exposed to the cutting blades, resulting in uneven distribution of food particle size. Additionally, the preset repeatability of the blades' path of travel may lead to a steady state, where finely chopped food is trapped in or near to the cutting volume while coarser food particles remain suspended outside of the cutting volume. While these problems may be rectified by alternating processing and physically agitating the mixture, for example stirring, such steps are inefficient and time consuming.

### SUMMARY

It is therefore advantageous to provide a food processing blade that allows a user to create a larger cutting volume.

The present matter provides a rotatable blade arm comprised of at least one blade and a flexible portion such that the blade moves between a first position and at least one other position in response to centrifugal force.

Further provided for is a food processing assembly comprising a flexible blade.

### BRIEF DESCRIPTION OF THE DRAWINGS

The flexible food processor blade described herein will be discussed in further detail with specific reference to the accompanying Figures in which:
Figure 1 is a sectioned view of one embodiment of a flexible food processor blade while in its first position.
Figure 2 is a sectioned view of one embodiment of a flexible food processor blade while in a second position in response to centrifugal force.
Figure 3 is a photo of one embodiment of a food processor using a flexible food processor blade while in its first position.

### DETAILED DESCRIPTION OF THE PREFERRED EMBODIMENTS

The present matter provides for a flexible food processor blade, whose flexibility allows for achievement of an improved cutting volume, and a food processor employing a flexible blade.

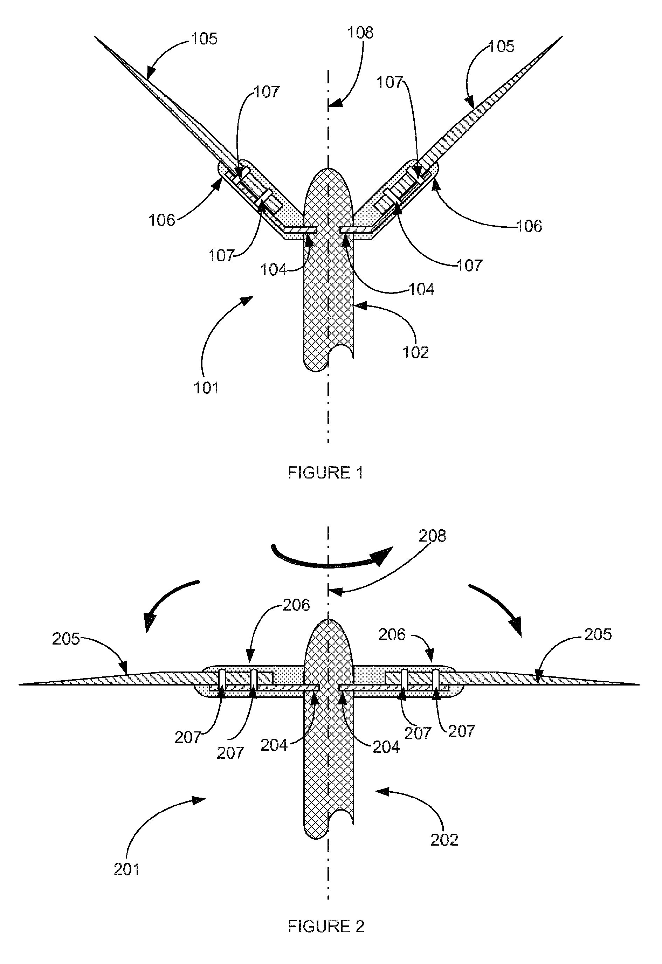

In a first embodiment, as shown in Figure 1 and Figure 2, a rotatable, flexible cutting blade 101 is powered by a drive mechanism (not shown) including a means to rotate the rotatable, flexible cutting blade 101 such as a shaft 102. Various orientations of the driving mechanism are possible, for example having it rotate the rotatable, flexible blade about a substantially horizontal axis or substantially vertical axis. The rotatable, flexible cutting blade 101 comprises at least one blade arm 103.

In one embodiment, the blade arm 103 is comprised of at least one cutting blade 105 and a flexible portion 104. The flexible portion 104 of the blade arm is mounted to the shaft 102 and serves to connect the shaft 102 to the cutting blade 105. Various forms of affixing the flexible portion 104 to the shaft 102 and cutting blade 105 will be apparent. In the embodiment shown in Figure 1 and Figure 2, this is accomplished by forming a single blade arm with two equally spaced and opposite cutting blades with a middle flexible portion formed to fixably interacting with the shaft 102. In this embodiment, the cutting blades are affixed to the flexible portion through use of rivets 107. A single blade arm comprising a flexible portion and multiple cutting blades mounted to the flexible portion therein is shown. However, multiple blade arms may be utilized.

The cutting blades 105 may be formed from any suitable material with rigidity to accept a sharpened edge and withstand the forces applied thereon during cutting operations. These materials may be metals such as stainless steel, however numerous other metals and certain plastics are known to possess these characteristics.

The flexible portion 104 of the blade arm 103 may be formed from a variety of materials suitably rigid to connect the drive mechanism to the cutting blades but flexible enough to respond to centrifugal forces applied to the blades. Further, the material and configuration thereof of the flexible portion should have sufficient integrity to withstand cutting forces applied to the blade and not to rip, tear or deform. Generally, such materials will include plastics and metals. More specifically, materials that are inert and will not react with foods may be used. Accordingly in the embodiment of Figure 1 and Figure 2, the material selected for the flexible portion is spring steel. The material of the flexible portion may be dependent on the type of food intended to be cut by the blade. Depending on the material of the flexible portion, the foods to be cut may be limited to herbs, cheeses and soft vegetables and exclude meats, nuts, coffee and hard vegetables. The flexible portion may be formed with a range of thicknesses depending on the material strength, the type of food to be processed and the rotation speed provided by the driving mechanism. While the embodiment in Figure 1 and Figure 2 provide a flexible portion relying on material flexibility, it will also be appreciated that the flexible portion may also be comprised of other flexible means, including mechanical means such as hinges, allowing connection of the blade blades to the drive mechanism such that they move away from a first position under centrifugal forces.

A portion of the blade arm 103 may have a covering layer 106 formed around it. In the embodiment at Figure 1, the covering 106 prevents interaction of food particles with the flexible portion 104, the rivets 107, and a portion of the blades 105. This may allow the flexible portion of the blade arm and the rivets to be made of non-inert material which may react with food. The covering 106 may be made of various materials provided they do not react with food and they are sufficiently flexible not to interfere with the operation of the flexible portion 104. The material used for the casing in this embodiment is thermoplastic rubber. However, it will be appreciated that other materials such as thermoplastic elastomers or silicones are also usable.

In one embodiment, the blade arm rests in a first position as shown in Figure 1. This the positioning of the blade arm can be accomplished through a number of means but is accomplished in this embodiment by forming the flexible portion into the first position. In the embodiment shown in Figure 1, the extremities of the blade arm are positioned at an initial angle of approximately 45 degrees relative to the shaft's rotation axis 108 while the flexible portion meets the shaft in a plane largely orthogonal to the shaft's rotation axis. Various orientations of the first position are feasible provided they are not substantively perpendicular to the shaft's rotation axis 108. While such position will still process food, the blades will not benefit from the improved cutting volume caused by movement away from the first position caused by centrifugal forces.

In the embodiment shown in Figures 1 and 2, the application of a driving force to the shaft causes it to rotate. As the shaft begins to rotate, centrifugal forces are applied to the cutting blades in directions orthogonal from the shaft's rotation axis 108. As the speed of rotation increases, so do the forces applied. As these forces increase, the blade arm will move away from the first position and begin to orient itself progressively closer to the orthogonal plane of the shaft's rotation axis 108. If sufficient rotational speed is achieved, the blade arm may eventual orient itself substantially along the orthogonal plane of the shaft's axis, though this is not required to achieve improved cutting volume. Subsequently, as the speed of rotation is reduced, the blade arm returns to substantially the first position. The movement of the blade arm away from the first position is shown in the progression between Figure 1 and Figure 2.

During operation of a food processor, as describe further below, variations in speed of rotation may be used so that the blade arm may oscillate between the first position and other desired positions. This may be accomplished by manual control of the food processor or through use of a control system, for example through pulsing an ON/OFF control.

The driving mechanism for operation of the shaft may be of several types including electric motors and manually operated mechanisms. Electric motors may be used as they give reliable speed ranges without requiring exertion on the part of the user. However, non-electric means of operating a food processor, such as a manual crank or other mechanical means known in the field may also be used if sufficient speeds can be reached to move the blade arm away from the first position.

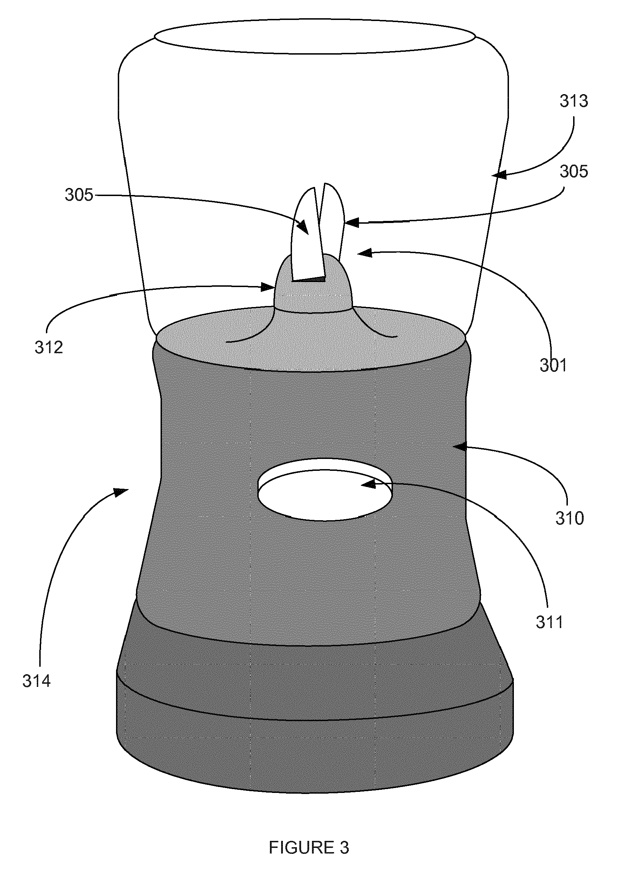

In one embodiment, shown in Figure 3, the rotatable, flexible cutting blade 301 forms part of a food processing apparatus 314. The rotatable, flexible cutting blade 301 is mounted to the body of an electric food processor 310 and driven by an electric motor (not shown). A removable plastic lid 313 placed on the top of the food processors allows for the containment of food while cutting is occurring. The body itself contains an electric motor (not shown) as well as mechanical means for connecting the electric motor to and driving the shaft 102 (not shown in Figure 3). In this embodiment, the shaft is further surrounded by a shaft housing 312 for aesthetic purposes as well as to facilitate cleaning of the apparatus. The rotatable, flexible cutting blade 301 may be mounted within the shaft housing 312 such that only the cutting blades 305 interact with the food. The electric motor is controlled by a switch 311, which in this embodiment is depressable and moves between an ON and OFF position. Additionally, the break up of food particles may be facilitated by pulsing of the motor by alternately depressing and releasing the switch 311, resulting in oscillating shaft rotation speeds and, consequently, repeated movement of the blade arm towards and away from the first position. Alternate embodiments may achieve this effect through use of switches with varying speed options or control means such that as the switch is depressed the motor alternates between high and low speed.

While the housing for the embodiment of a food processor in Figure 3 is designed to optimize the chopping of herbs, it will be appreciated that large variations are possible to the structure of a food processor within the general field. For example, larger or smaller housing structures may be used depending on the power and size of the electric motor, and substantially different designs may be used where the food processor is manually powered. Various mechanisms for feeding food into the removable housing area may also be employed.

While this invention has been described with reference to illustrative embodiments and examples, the description is not intended to be construed in a limiting sense. Thus, various modification of the illustrative embodiments, as well as other embodiments of the invention, will be apparent to persons skilled in the art upon reference to this description. It is therefore contemplated that the appended claims will cover any such modifications or embodiments.

## Claims

1. A rotatable, flexible cutting blade for a food processor comprising:
at least one blade arm configured for mounting for rotation by a drive mechanism of a food processor comprising:
at least one cutting blade; and
a flexible portion connecting with the at least one blade to the drive mechanism;
wherein the blade arm in a first position at rest and is flexibly movable through a range of other positions responsive to centrifugal forces when rotated by the drive mechanism.

2. The rotatable, flexible cutting blade of claim 1, wherein the first position is substantially outside of a plane orthogonal to an axis of rotation.

3. The rotatable, flexible cutting blade of any one of claims 1 to 2, wherein the flexible portion is metal.

4. The rotatable, flexible cutting blade of any one of claims 1 to 3, wherein the flexible portion and a portion of the at least one cutting blade are encased in a material.

5. The rotatable, flexible cutting blade of claim 4, where the material is a plastic or rubber.

6. The rotatable, flexible cutting blade of claim 5, where the material is thermoplastic rubber.

7. A food processing apparatus comprising:
a drive mechanism;
at least one blade arm configured for mounting for rotation by the drive mechanism comprising:
at least one cutting blade; and
a flexible portion connecting with the at least one blade to the drive mechanism;
wherein the blade arm is in a first position at rest and is flexibly movable through a range of other positions responsive to centrifugal forces when rotated by the drive mechanism; and
a housing with removable portion to allow food access to the at least one blade arms.

8. The food processing apparatus of claim 7, wherein the first position is substantially outside of a plane orthogonal to an axis of rotation.

9. The food processing apparatus of any one of claims 7 to 8, wherein the flexible portion is metal.

10. The rotatable, flexible cutting blade of any one of claims 7 to 9, wherein the flexible portion and a portion of the at least one cutting blade are encased in a material.

11. The food processing apparatus of claim 10, where the material is a plastic or rubber. The food processing apparatus of claim 11, where the material is thermoplastic rubber.

12. The food processing apparatus of any one of claims 7 to 12, wherein the driving mechanism is an electric motor.

13. The food processing apparatus of claim 14 wherein the electric motor has control means to allow for variation in the speed of the drive mechanism.
